# EUROPÄISCHE PATENTSCHRIFT

(11) **EP 1 972 844 B1**
(45) Veröffentlichungstag und Bekanntmachung des Hinweises auf die Patenterteilung: **06.10.2010**
(21) Anmeldenummer: 07405099.8
(22) Anmeldetag: 22.03.2007
(51) Int. Cl.: F16L 37/092

(54) **Fitting für Wasserrohre**
Fitting for water pipes
Raccord pour tuyaux d'eau

(43) Veröffentlichungstag der Anmeldung: 24.09.2008
(73) Patentinhaber: Geberit International AG, 8645 Jona (CH)
(72) Erfinder: Hansruedi Wili, 8645 Jona (CH); Roger Wyss, 8633 Wolfhausen (CH); Huber René, 8645 Jona (CH)
(74) Vertreter: Groner, Manfred

(56) Entgegenhaltungen:
- EP-A- 1 722 146
- EP-A1- 1 296 089
- WO-A-03/044416
- JP-A- 2002 357 295

## Beschreibung

Die Erfindung betrifft einen Fitting für Wasserrohre nach dem Oberbegriff des Anspruchs 1.

Fittinge dieser Art sind als Steckfittinge oder Pressfittinge seit langem bekannt. Sie ermöglichen es, Wasserrohre und insbesondere Verbundrohre miteinander zu verbinden oder an eine Armatur anzuschliessen. Damit die Verbindung dicht ist, ist es wesentlich, dass das Rohrende vollständig in den Fitting eingesetzt wird. Bei nicht vollständig eingesetztem Rohrende kann die Dichtigkeit nicht gewährleistet werden.

Damit beim Montieren der Verbindung das vollständige Einsetzen des Rohrendes in den Fitting kontrolliert werden kann, sind im Stand der Technik bereits Kontrollmittel bekannt. Beispielsweise zeigt die EP 1 154 187 A einen Pressfitting für Kunststoff-Verbundrohre, der ein Kontrollmittel aufweist. Dieses ist ein Isolierring aus Kunststoff, der in der Art einer gewölbten Federscheibe in Richtung zum Rohrende zweimal konvex gewölbt ist. In der Mitte jeder konvexen Wölbung ist eine achsparallele Zunge angeformt, die in eine Ausnehmung einer Aussenumfangsrippe eingreift. Bei vollständig eingeschobenem Rohr ragen diese Zungen jeweils aus der entsprechenden Ausnehmung hervor und sind visuell sichtbar als auch fühlbar. Die Sichtbarkeit solcher vorragender Zungen ist jedoch vielfach nicht hinreichend. Dies insbesondere dann, wenn der Fitting an einer schlecht einsichtbaren Stelle angeordnet ist, wie dies bei Sanitärleitungen häufig der Fall ist.

Die EP-A-1 296 089 offenbart eine Anschlussvorrichtung, die ein Indikatorelement mit einem Kontrollabschnitt aufweist, der radial beweglich in einer nach aussen führenden Queröffnung des Aufnahmeteils angeordnet ist. Vor dem Einführen des Rohrendes überragt der Kontrollabschnitt die Aussenkontur des Aufnahmeteils.

Die EP 1 1722 146 A offenbart ein Fitting für Wasserrohre mit wenigsten einem Stutzen, auf den ein anzuschließendes Rohrende aufschiebbar ist, mit einem Außenteil, welches den Stutzen umgibt und mit einer Außenseite des Stutzens einen Zwischenraum bildet, in den das anzuschließende Rohrende einschiebbar ist, mit einem in diesem Zwischenraum angeordneten Anschlag und mit einem Kontrollmittel, das eine korrekte Position des Rohrendes im Fitting visuell anzeigt, wobei das Außenteil in einer Mantelfläche ein Sichtfenster aufweist und das Kontrollmittel im genannten Zwischenraum mit dem Rohrende in Längsrichtung des Fittings von einer ersten Position in eine zweite Position verschiebbar ist, wobei das Kontrollmittel in der zweiten Position im Sichtfenster sichtbar ist.

Der Erfindung liegt die Aufgabe zugrunde, einen Fitting der genannten Art zu schaffen, der eine noch sicherere und deutlichere visuelle Kontrolle ermöglicht.

Die Aufgabe ist bei einem gattungsgemässen Fitting gemäss Anspruch 1 gelöst. Beim erfindungsgemässen Fitting erfolgt die visuelle Kontrolle an wenigstens einem Fenster, in dem das vollständige Einschieben des Rohrendes durch eine Farb- bzw. Kontraständerung ersichtlich ist. Das Fenster ist an einer Mantelfläche des Aussenteils angeordnet. Das Fenster ist damit in aller Regel gut sichtbar. Die Sichtbarkeit kann durch einen hohen Farbkontrast zwischen dem Kontrollmittel und der genannten Mantelfläche in einfacher Weise erhöht werden. Dadurch ergibt sich eine sehr hohe Stecksicherheit. Die Erfindung eignet sich insbesondere für Fittinge, bei denen der Aussenteil nicht verpresst wird. Das Rohr wird bei diesen Fittingen selbsttätig mit einem Rückhaltemittel fixiert. Zum Montieren der Verbindung muss somit lediglich das Rohrende in den Fitting eingeschoben werden. Dies kann ohne Werkzeug erfolgen. Notwendig ist dann lediglich noch die genannte visuelle Kontrolle.

Das Kontrollmittel kann zwei Bereiche aufweisen, wobei in der ersten Position der eine Bereich und in der zweiten Position der andere Bereich sichtbar ist.

Nach der Erfindung ist das Kontrollmittel in der genannten zweiten Position verrastet. Das Kontrollmittel besitzt damit eine genau definierte Endposition. Diese wird auch dann gehalten, wenn das Rohrende noch geringfügig zurückgezogen wird.

Nach einer Weiterbildung der Erfindung ist das Kontrollmittel ringförmig oder hülsenförmig ausgebildet. Insbesondere sind dann mehrere Sichtfenster möglich, beispielsweise zwei diametral gegenüberliegende Sichtfenster.

Nach einer Weiterbildung der Erfindung ist das Kontrollmittel im Querschnitt L-förmig ausgebildet. Insbesondere ist hierbei vorgesehen, dass im Querschnitt gesehen der eine Schenkel des Kontrollmittels bei eingesetztem Rohrende an der Stirnseite des Rohrendes anliegt und der andere Schenkel an der Aussenseite des Rohrendes anliegt und dieser andere Schenkel durch das genannte Fenster wenigstens bereichsweise sichtbar ist. Das Kontrollmittel kann damit wirksam die Stirnseite des Rohrendes, insbesondere gegen Korrosion schützen. Ein solcher Korrosionsschutz ist vor allem bei Verbundrohren zweckmässig, bei denen eine mittlere Schicht aus einem Metall, beispielsweise aus Aluminium hergestellt ist. Vorzugsweise wird das Fenster durch den genannten anderen Schenkel im Wesentlichen vollständig abgedichtet.

Nach einer Weiterbildung der Erfindung ist vorgesehen, dass das Aussenteil mit einem Verriegelungsteil mit dem Stutzen verriegelt ist. Dies ermöglicht eine besonders einfache Montage. Hierbei wird das Kontrollmittel auf den Stutzen aufgesetzt und anschliessend wird das Aussenteil auf den Stutzen aufgesetzt und mit dem Verriegelungsteil mit dem Stutzen verriegelt. Die Verriegelung kann lösbar oder unlösbar sein. Geeignete Verriegelungsteile sind an sich bekannt.

Nach einer Weiterbildung der Erfindung ist vorgesehen, dass an einer Innenseite des Aussenteils ein Rückhaltemittel angeordnet ist und dass das Kontrollmittel in der genannten ersten Position in Einschieberichtung des Rohrendes nach diesem Rückhaltemittel angeordnet ist. In der genannten ersten Position befindet sich das Kontrollmittel in Einsteckrichtung vorzugsweise unmittelbar nach dem Rückhaltemittel. In dieser ersten Position ist das Kontrollmittel vorzugsweise verrastet. Beim Einschieben des Rohrendes wird diese Verrastung aufgehoben. Damit ergibt sich eine sichere erste Position des Kontrollmittels. In dieser ersten Position ist das Kontrollmittel durch das genannte Fenster nicht oder zumindest kaum sichtbar.

Nach einer Weiterbildung der Erfindung ist zwischen dem Stutzen und dem Aussenteil ein Rückhaltemittel angeordnet, das ein in den Zwischenraum eingesetztes Rohrende selbsttätig gegen ein Zurückziehen fixiert. Dieses Rückhaltemittel ist insbesondere keilförmig ausgebildet und wird nach dem Einschieben des Rohrendes radial nach aussen gespannt. Hierbei graben sich Rippen oder Zähne des Rückhaltemittels in die Aussenseite des Rohrendes ein und fixieren dadurch das Rohrende in der Endposition.

Die Erfindung betrifft zudem eine Rohrverbindung mit wenigstens einem Fitting der genannten Art. Die Rohrverbindung ist vorzugsweise eine Steckverbindung zwischen dem Fitting und wenigstens einem Verbundsrohr.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: Längsschnitt durch einen erfindungsgemässen Fitting mit einem Rohrende, das an den Fitting angeschlossen werden soll,
- Figur 2: ein Schnitt gemäss Figur 1, wobei hier jedoch das Rohrende teilweise in den Fitting eingesetzt ist,
- Figur 3: ein Schnitt gemäss Figur 1, jedoch mit vollständig eingesetzten Rohrende und
- Figur 4: schematisch eine räumliche Ansicht des erfindungsgemässen Fittings mit eingesetztem Rohrende.

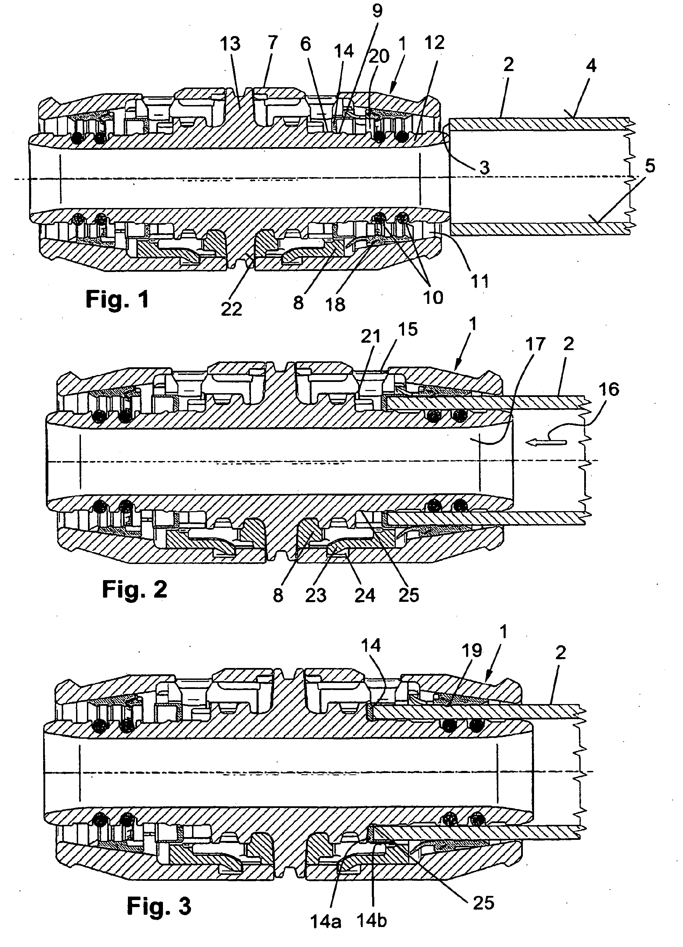

Der Fitting 1 besitzt zum Anschliessen eines Rohres 2 einen Stutzen 12, der mit einem Aussenteil 7 einen Zwischenraum 20 bildet. Dieser Zwischenraum 20 ist im Wesentlichen zylindrisch ausgebildet und besitzt eine vordere ringförmige Öffnung 11, in welche das Rohr 2 gemäss Figur 2 in Richtung des Pfeils 16 einschiebbar ist. Der Fitting 1 ist bei dem gezeigten Ausführungsbeispiel ein Doppelfitting mit einem geraden Durchgang 17 und entsprechend besitzt dieser zwei gleiche Stutzen 12. Der Fitting 1 kann aber auch lediglich einen Stutzen 12 oder mehrere solche Stutzen aufweisen. Der Fitting 1 kann auch beispielsweise ein T-Stutzen sein, an demjenigen drei Rohre miteinander verbunden werden können. Der Fitting 1 kann aber auch an einer Armatur, beispielsweise an einem Wasserhahn angeordnet sein.

Das Rohr 2 ist vorzugsweise ein Verbundrohr und besitzt eine Stirnseite 3, eine Umfangsfläche 4 sowie eine Innenseite 5. Das Rohr 2 besitzt insbesondere eine hier nicht gezeigte mittlere Schicht aus Metall, beispielsweise Aluminium und eine innere sowie eine äussere Schicht, die jeweils aus einem geeigneten Kunststoff hergestellt sind. Diese Schichten sind an der Stirnseite 3 sichtbar.

Das Aussenteil 7 ist auf den Stutzen 12 aufgesetzt und liegt mit einer vorderen Fläche 22 an einem Wulst 13 an. Mit einem Verriegelungsteil 8 ist das Aussenteil 7 fest mit dem Stutzen 12 verbunden. Das Verriegelungsteil 8 befindet sich ebenfalls im Zwischenraum 20 und zwar unmittelbar vor dem Wulst 13. Die Verriegelung erfolgt hier mit Rastzungen 23, die in eine umlaufende Nut 24 an der Innenseite des Aussenteils 7 eingreift. Solche Verriegelungsmittel sind an sich bekannt. Grundsätzlich kann das Aussenteil 7 aber auch auf andere Weise fest mit dem Stutzen 12 verbunden sein. Zum Abdichten des eingesetzten Rohres 2 sind auf dem Stutzen 12 zwei im Abstand zueinander angeordnete Dichtungsringe 10 eingesetzt. Das Rohr 2 ist somit unmittelbar nach der Öffnung 11 gegenüber dem Fitting 1 abgedichtet.

In Einsteckrichtung ist im Aussenteil 7 ein Rückhaltemittel 18 gelagert, das nach innen gerichtete Rippen 19, Zähne oder Krallen besitzt. Das Rückhaltemittel 18 dient dazu, das gemäss Figur 3 in den Zwischenraum 20 eingesetzte Rohr 2 gegen eine Auszugskraft zu fixieren. Wird das Rohr 2 in den Zwischenraum 20 eingesetzt, so wird das ringförmige Rückhaltemittel 18 radial nach aussen gespannt und die Rippen 19 bzw. Krallen graben sich in die Umfangsfläche 4 ein und fixieren dadurch das Rohr 2.

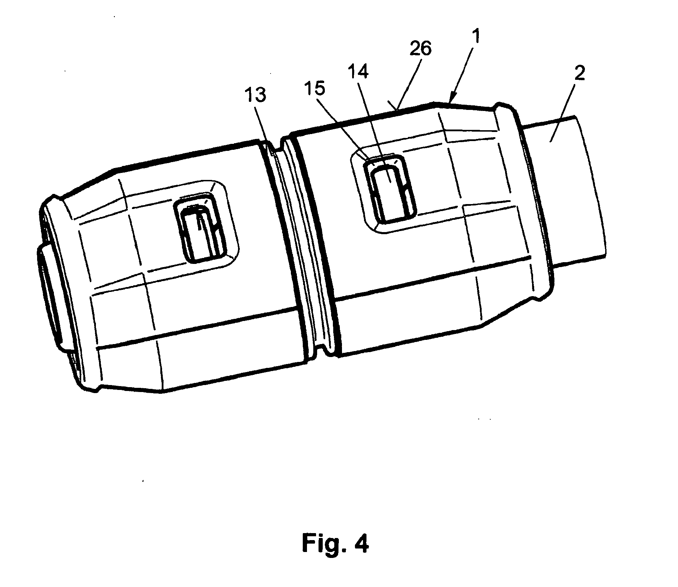

Im Zwischenraum 20 ist zudem ein Kontrollmittel 14 angeordnet, das in Einsteckrichtung nach dem Rückhaltemittel 18 und im Abstand zu einer Anschlagfläche 21 angeordnet ist. In dieser in Figur 1 gezeigten Position ist das Kontrollmittel 14 in einer Nut 9 achsial verrastet. Diese Position ist die erste Position oder Grundposition. Wieder in Einsteckrichtung gesehen nach dem Kontrollmittel 14 befindet sich im Aussenteil 7 wenigstens ein Fenster 15, das durch einen Durchbruch im Aussenteil 7 gebildet wird. Das Fenster 15 ist beispielsweise gemäss Figur 4 rechteckig und befindet sich im Abstand zum Wulst 13. Vorzugsweise sind mehrere solche Fenster 15 im Aussenteil 7 vorgesehen. Insbesondere sind zwei diametral gegenüberliegende Fenster 15 vorgesehen. Der gezeigte Doppelfitting 1 besitzt somit insbesondere vier solche Fenster 15.

Das Kontrollmittel 14 ist wie ersichtlich im Querschnitt L-förmig ausgebildet. Es besitzt im Querschnitt gesehen einen ersten Schenkel 14a und einen winklig von dem abstehenden zweiten Schenkel 14b (Fig. 3). Der Schenkel 14a liegt bei eingesetztem Rohr 2 an der Stirnseite 3 an und deckt diese somit ab. Der andere Schenkel 14b liegt hingegen unmittelbar hinter der Stirnseite 3 an der Umfangsfläche 4 an.

Wird das Rohr 2 gemäss Figur 2 in Richtung des Pfeils 16 durch die Öffnung 11 in den Zwischenraum 20 geschoben, so erreicht bei der in Figur 2 gezeigten Position die Stirnseite 3 das Kontrollmittel 14 und schiebt dieses weiter, bis es an einer Anschlagfläche 21 anliegt. Das Rohr 2 kann nun nicht weiter in den Zwischenraum 20 eingeschoben werden und hat die Endposition erreicht. Eine Rastrippe 6 wird hierbei vom Kontrollmittel 14 übersprungen.

Hat das Kontrollmittel 14 die in Figur 3 gezeigte Endposition bzw. zweite Position erreicht, so ist der Schenkel 14a in eine Nut 25 des Stutzens 12 eingerastet. In dieser zweiten Position ist das Kontrollmittel 14 somit fixiert und kann diese Position nicht mehr verlassen. Dies auch dann, wenn das Rohr 2 geringfügig zurückgezogen wird. Ein solches Zurückziehen ist bei einem Test möglich, beeinträchtigt aber die Dichtigkeit in keiner Weise. In dieser zweiten Position befindet sich das Kontrollmittel 14 in Achsialrichtung gesehen auf der Höhe des Fensters 15. Durch das Fenster 15 ist das Kontrollmittel 14 sichtbar, wie dies insbesondere die Figur 4 zeigt. Es ist nun vorgesehen, dass das Kontrollmittel 14 einen möglichst hohen Farbkontrast zu einer Aussenseite 26 des Aussenteils 7 bildet. Das Kontrollmittel 14 ist beispielsweise rot und die Aussenseite 26 dunkel, beispielsweise schwarz. Befindet sich das Kontrollmittel 14 in der in Figur 1 oder in Figur 2 gezeigten Position, so ist durch das Fenster 15 hindurch der Stutzen 12 sichtbar. Der genannte Farbkontrast ist dann nicht vorhanden oder es ist durch das Fenster 15 eine andere Farbe sichtbar. Beim Einschieben des Rohres 2 kann beispielsweise die sichtbare Fläche von schwarz oder weiss auf rot wechseln. Ein solcher Farbwechsel ist besonders auffällig und kann visuell auch in einer schlecht beleuchteten Nische erkannt werden. Befindet sich das Kontrollmittel 14 nur teilweise im Bereich des Fensters 15, so ist es ebenfalls visuell auffällig und sichtbar. Das Kontrollmittel 14 bildet somit ein Anzeigemittel, das anzeigt, dass das Rohr 2 vollständig und bis zum Anschlag in den Zwischenraum 20 in den Fitting 1 eingeschoben worden ist. Die Blickrichtung bei einer Kontrolle radial zur Längsrichtung des Fittings kann aber auch geneigt dazu sein, so dass das Vorhandensein bzw. das Nichtvorhandensein des Kontrollmittels 14 im Fenster 15 aus verschiedenen Blickrichtungen erkennbar ist.

Bei einer alternativen Ausführung ist das Kontrollmittel 14 in der ersten Position mit einem Farbkontrast sichtbar ist. In dieser ersten Position ist das Kontrollmittel 14 in der Nut 9 verrastet oder sonstwie achsial fixiert. Wird das Rohr 2 durch die Öffnung 11 eingeführt, so wird das Kontrollmittel 14 wie oben erläutert von der ersten Position in die zweite Position verschoben. In der zweiten Position erscheint im Fenster ein weiterer Bereich des Kontrollmittels. Dieser weitere Bereich besitzt eine andere Farbe als der erste Bereich und diese andere Farbe entspricht der Farbe der Aussenseite 26 des Aussenteils 7, womit der vor dem Fügen vorhanden gewesene Farbkontrast aufgehoben ist. Vor dem Fügen ist beispielsweise im Fenster 15 ein schwarzer Bereich sichtbar. Möglich ist auch eine Umkehrung. Danach wäre vor dem Fügen durch das Fenster 15 eine Kontrastfarbe, beispielsweise Rot, sichtbar und nach dem Fügen wäre diese Kontrastfarbe nicht mehr sichtbar. Wesentlich ist somit eine Farb- bzw. Kontraständerung im Fenster beim Herstellen der Verbindung.

### Bezugszeichenliste

- 1: Fitting
- 2: Rohr
- 3: Stirnseite
- 4: Umfangsfläche
- 5: Innenseite
- 6: Rastrippe
- 7: Aussenteil
- 8: Verriegelungsteil
- 9: Nut
- 10: Dichtungsring
- 11: Öffnung
- 12: Stutzen
- 13: Wulst
- 14: Kontrollmittel
- 14a: Schenkel
- 14b: Schenkel
- 15: Fenster
- 16: Pfeil
- 17: Durchgang
- 18: Rückhaltemittel
- 19: Rippe
- 20: Zwischenraum
- 21: Anschlagfläche
- 22: Fläche
- 23: Rastzungen
- 24: Nut
- 25: Nut
- 26: Aussenseite

## Patentansprüche

1. Fitting für Wasserrohre, insbesondere Verbundrohre, mit wenigsten einem Stutzen (12), auf den ein anzuschliessendes Rohrende (2) aufschiebbar ist, mit einem Aussenteil (7), welches den Stutzen (12) umgibt und mit einer Aussenseite des Stutzens (12) einen Zwischenraum (20) bildet, in den das anzuschliessende Rohrende (2) einschiebbar ist, mit einem in diesem Zwischenraum (20) angeordneten Anschlag (21) und mit einem Kontrollmittel (14), das eine korrekte Position des Rohrendes (2) im Fitting (1) visuell anzeigt, mit einem zwischen dem Stutzen (12) und dem Aussenventil angeordnet Rückhaltemittel (18), das ein in den Zwischenraum (20) eingesetztes Rohrende (2) selbsttätig gegen ein Zurückziehen fixiert, wobei das Aussenteil (7) in einer Mantelfläche (26) ein Sichtfenster (15) aufweist und das Kontrollmittel (14) im genannten Zwischenraum (20) mit dem Rohrende (2) in Längsrichtung des Fittings (1) von einer ersten Position in eine zweite Position verschiebbar ist, wobei das Kontrollmittel (14) in der zweiten Position im Sichtfenster (15) sichtbar ist und beim Verschieben des Kontrollmittels (14) in die zweite Position im genannten Sichtfenster (15) eine Farb- bzw. Kontraständerung stattfindet, und wobei das Kontrollmittel (14) in der genannten zweiten Position verrastet ist.

2. Fitting nach Anspruch 1, **dadurch gekennzeichnet, dass** das Kontrollmittel (14) in der zweiten Position in einer Nut (25) des Stutzens (12) verrastet ist.

3. Fitting nach Anspruch 1 oder 2, **dadurch gekennzeichnet, dass** das Kontrollmittel (14) ringförmig oder hülsenförmig ausgebildet ist.

4. Fitting nach Anspruch 3, **dadurch gekennzeichnet, dass** das Kontrollmittel (14) im Querschnitt L-förmig ausgebildet ist.

5. Fitting nach Anspruch 4, **dadurch gekennzeichnet, dass** im Querschnitt gesehen der eine Schenkel (14a) des Kontrollmittels (14) bei eingesetztem Rohrende (2) an der Stirnseite (3) des Rohrendes (2) dichtend anliegt und der andere Schenkel (14b) an der Aussenseite (4) des Rohrendes (2) anliegt und dieser andere Schenkel (14b) durch das genannte Fenster (15) bereichsweise sichtbar ist.

6. Fitting nach einem der Ansprüche 1 bis 5, **dadurch gekennzeichnet, dass** das Aussenteil (7) mit einem Verriegelungsteil (8) mit dem Stutzen (12) verriegelt ist.

7. Fitting nach einem der Ansprüche 1 bis 6, **dadurch gekennzeichnet, dass** der genannte Stutzen (12) aussenseitig wenigsten einen Dichtungsring (10) aufweist, der im Abstand zum genannten Anschlag (21) angeordnet ist.

8. Fitting nach Anspruch 1, **dadurch gekennzeichnet, dass** das Rückhaltemittel (18) im Aussenteil (7) gelagert ist.

9. Fitting nach einem der Ansprüche 1 bis 8, **dadurch gekennzeichnet, dass** er als Doppelfitting, als T-Stutzen oder Anschlussteil einer Armatur ausgebildet ist.

10. Fitting nach einem der Ansprüche 1 bis 9, **dadurch gekennzeichnet, dass** das Kontrollmittel (14) zwei Bereiche aufweist, wobei der eine Bereich in der ersten Position und der zweite Bereich in der zweiten Position im Sichtfenster (15) sichtbar ist.

11. Fitting nach Anspruch 1, **dadurch gekennzeichnet, dass** das Kontrollmittel (14) auch in der ersten Position verrastet ist.

12. Rohrverbindung mit einem Fitting gemäss einem der Ansprüche 1 bis 10, **dadurch gekennzeichnet, dass** die Verbindung zwischen dem Fitting und dem Rohr (2) eine Steckverbindung ist und dass das Rohr ein Verbundrohr ist.

13. Rohrverbindung gemäss Anspruch 11, **dadurch gekennzeichnet, dass** sie eine Armatur mit einem Wasserleitungsrohr und insbesondere einem Verbundrohr (2) verbindet.

## Claims

1. Fitting for water pipes, in particular composite pipes, having at least one stub (12), onto which can be pushed a pipe end (2) which is to be connected, having an outer part (7) which encloses the stub (12) and, with an outer side of the stub (12), forms an interspace (20) into which can be pushed the pipe end (2) which is to be connected, having a stop (21), which is arranged in this interspace (20), and having a control means (14), which indicates visually the correct position of the pipe end (2) in the fitting (1), having a restraining means (18), which is arranged between the stub (12) and the outer part and by means of which a pipe end (2) inserted into the interspace (20) is fixed automatically against being pulled back, wherein the outer part (7) has a viewing window (15) in a lateral surface (26), and the control means (14) can be displaced in the aforementioned interspace (20), along with the pipe end (2), in the longitudinal direction of the fitting (1) from a first position into a second position, wherein the control means (14) is visible in the viewing window (15) in the second position and, upon displacement of the control means (14) into the second position in the aforementioned viewing window (15), a change in colour or contrast takes place, and wherein the control means (14) is latched in the aforementioned second position.

2. Fitting according to Claim 1, **characterized in that** the control means (14), in the second position is latched in a groove (25) of the stub (12).

3. Fitting according to Claim 1 or 2, **characterized in that** the control means (14) is of annular or sleeve-like design.

4. Fitting according to Claim 3, **characterized in that** the control means (14) is L-shaped in cross section.

5. Fitting according to Claim 4, **characterized in that**, as seen in cross section, the one leg (14a) of the control means (14), with the pipe end (2) inserted, butts with sealing action against the end side (3) of the pipe end (2) and the other leg (14b) butts against the outer side (4) of the pipe end (2), and certain regions of this other leg (14b) are visible through the aforementioned window (15).

6. Fitting according to one of Claims 1 to 5, **characterized in that** the outer part (7) is locked to the stub (12) by a locking part (8).

7. Fitting according to one of Claims 1 to 6, **characterized in that** the aforementioned stub (12) has, on its outer side, at least one sealing ring (10), which is spaced apart from the aforementioned stop (21).

8. Fitting according to Claim 1, **characterized in that** the restraining means (18) is mounted in the outer part (7).

9. Fitting according to one of Claims 1 to 8, **characterized in that** it is designed as a double fitting, as a T-shaped connector or as a fixture connection part.

10. Fitting according to one of Claims 1 to 9, **characterized in that** the control means (14) has two regions, wherein the one region is visible in the viewing window (15) in the first position and the second region is visible therein in the second position.

11. Fitting according to Claim 1, **characterized in that** the control means (14) is also latched in the first position.

12. Pipe connection having a fitting according to one of Claims 1 to 10, **characterized in that** the connection between the fitting and the pipe (2) is a plug-in connection, and **in that** the pipe is a composite pipe.

13. Pipe connection according to Claim 12, **characterized in that** it connects a fixture to a water pipe and, in particular, to a composite pipe (2).

## Revendications

1. Raccord pour tuyaux d'eau, en particulier des tuyaux composites, comprenant au moins une tubulure (12) sur laquelle peut être enfoncée une extrémité de tuyau à raccorder (2), au moins une partie extérieure (7) qui entoure la tubulure (12) et qui forme, avec un côté extérieur de la tubulure (12), un espace intermédiaire (20), dans lequel l'extrémité de tuyau à raccorder (2) peut être introduite, une butée (21) disposée dans cet espace intermédiaire (20) et un moyen de contrôle (14), qui indique visuellement une position correcte de l'extrémité de tuyau (2) dans le raccord (1), un moyen de retenue (18) disposé entre la tubulure (12) et la soupape extérieure, qui fixe une extrémité de tuyau (2) insérée dans l'espace intermédiaire (20) de manière automatique pour l'empêcher d'être retirée, la partie extérieure (7) présentant dans une surface d'enveloppe (26) une fenêtre de vue (15) et le moyen de contrôle (14) dans ledit espace intermédiaire (20) pouvant être déplacé avec l'extrémité de tuyau (2) dans la direction longitudinale du raccord (1) d'une première position à une deuxième position, le moyen de contrôle (14) dans la deuxième position pouvant être vu par la fenêtre de vue (15) et un changement de couleur ou de contraste se produisant lors du déplacement du moyen de contrôle (14) jusqu'à la deuxième position dans ladite fenêtre de vue (15) et le moyen de contrôle (14) étant encliqueté dans ladite deuxième position.

2. Raccord selon la revendication 1, **caractérisé en ce que** le moyen de contrôle (14) est encliqueté dans la deuxième position dans une rainure (25) de la tubulure (12).

3. Raccord selon la revendication 1 ou 2, **caractérisé en ce que** le moyen de contrôle (14) est réalisé sous forme annulaire ou sous forme de douille.

4. Raccord selon la revendication 3, **caractérisé en ce que** le moyen de contrôle (14) est réalisé en forme de L en section transversale.

5. Raccord selon la revendication 4, **caractérisé en ce que**, vue en section transversale, l'une des branches (14a) du moyen de contrôle (14), lorsque l'extrémité du tuyau (2) est insérée, s'applique hermétiquement contre le côté frontal (3) de l'extrémité du tuyau (2) et l'autre branche (14b) s'applique contre le côté extérieur (4) de l'extrémité de tuyau (2) et cette autre branche (14b) peut être visible en partie à travers ladite fenêtre (15).

6. Raccord selon l'une quelconque des revendications 1 à 5, **caractérisé en ce que** la partie extérieure (7) est verrouillée avec une partie de verre (8) à la tubulure (12).

7. Raccord selon l'une quelconque des revendications 1 à 6, **caractérisé en ce que** ladite tubulure (12) présente, du côté extérieur, au moins une bague d'étanchéité (10), qui est disposée à distance de ladite butée (21).

8. Raccord selon la revendication 1, **caractérisé en ce que** le moyen de retenue (18) est monté dans la partie extérieure (7).

9. Raccord selon l'une quelconque des revendications 1 à 8, **caractérisé en ce qu'**il est réalisé sous forme de double raccord, de tubulure en T ou de pièce de raccordement d'un robinet.

10. Raccord selon l'une quelconque des revendications 1 à 9, **caractérisé en ce que** le moyen de contrôle (14) présente deux régions, l'une des régions étant visible dans la première position et la deuxième région étant visible dans la deuxième position à travers la fenêtre de vue (15).

11. Raccord selon la revendication 1, **caractérisé en ce que** le moyen de contrôle (14) est aussi encliqueté dans la première position.

12. Connexion de tuyau comprenant un raccord selon l'une quelconque des revendications 1 à 10, **caractérisée en ce que** la connexion entre le raccord et le tuyau (2) est une connexion par enfichage et **en ce que** le tuyau est un tuyau composite.

13. Connexion de tuyau selon la revendication 12, **caractérisée en ce qu'**elle relie un robinet à un tuyau de conduite d'eau et notamment un tuyau composite (2).
